# EUROPEAN PATENT APPLICATION

(11) **EP 3 333 796 A1**
(43) Date of publication of application: **13.06.2018**
(21) Application number: 16833226.0
(22) Date of filing: 22.07.2016
(51) Int. Cl.: G06Q 40/02, G06Q 40/00, H04L 9/32

(54) **FINANCIAL TRANSACTION RELAY SYSTEM HAVING MULTI-SAFETY LOCK FUNCTION OF PROCESSING USER AUTHENTICATION BY SCANNING BOTH FINGER PULSE AND FINGERPRINT, AND PROCESSING METHOD THEREFOR**

(30) Priority: 03.08.2015 KR 20150109633; 26.08.2015 KR 20150120087
(71) Applicant: All It Top Co., Ltd., Seoul 01062 (KR)
(72) Inventor: CHOI, Sung Ho, Uiwang-si Gyeonggi-do 16054 (KR); SONG, Chung Ja, Uiwang-si Gyeonggi-do 16054 (KR)
(74) Representative: Algemeen Octrooi- en Merkenbureau B.V.
(86) International application number: PCT/KR2016/008025
(87) International publication number: WO 2017/022990

(57) **Abstract**

A financial transaction relay system, of the present invention, comprises a financial transaction relay server for relaying, through an authentication-free access, a financial transaction to be performed among a customer terminal, an electronic financial transaction system, and electronic commerce systems. The financial transaction relay server comprises: a multi-safety lock module for processing authentication of a user who uses finger pulse authentication, fingerprint authentication, password authentication, and telephone number authentication of the customer terminal; and a middleware firewall. According to the present invention, when the customer terminal performs an electronic financial transaction or an electronic commerce, relay processing can be performed by receiving fingerprint information and finger pulse information from the customer terminal and processing authentication, such that a financial transaction can be performed through authentication-free access to the electronic financial transaction system and the electronic commerce systems, and thus user authentication error can be minimized.

## Description

### [Technical Field]

The present invention relates to a financial transaction relay system, and more particularly, to a financial transaction relay system having a multi-safety lock function which allows authentication-free access for a financial transaction, an e-commerce transaction, etc. by processing fingerprint authentication, firewall password authentication using a finger vein, and financial-management middleware authentication, simultaneously scans finger veins and a fingerprint, processes user authentication by sequentially using the finger veins and the fingerprint to prevent user authentication error resulting from unidentifiable finger veins and an unidentifiable fingerprint, and allows authentication-free access for a financial transaction, an e-commerce transaction, etc. by processing firewall password authentication and financial-management middleware authentication, and a processing method of the financial transaction relay system.

### [Background Art]

With the use of cellular phones, smart phones, etc. and the rapid proliferation of wireless Internet, banking and e-commerce processing using mobile devices is increasing recently.

Currently, mobile devices use chips issued by banks to perform financial transactions, such as banking, e-commerce, etc., instead of credit cards. To this end, mobile devices include chips therein, and are used to make payments at convenience stores and stores in which dedicated terminals are installed. However, there is a limitation in the payable amount, and it is not possible to make a payment at a place without a dedicated terminal. Also, for a general commercial transaction, it is difficult to immediately process an account transfer or make a payment with a chip included in a mobile device.

In general, personal financial transactions are protected with a certificate, a password, etc. to prevent private damage that may be caused by leakage and theft of personal information, a password, etc. in an electronic financial transaction between an individual and a bank. However, the protection totally depends on security technology of the bank, and thus the bank cannot prevent private damage caused by a private mistake.

To solve this problem, biometric recognition technology is currently being applied to an e-commerce transaction caused by a payment with a credit card in an online shopping mall and the like, and an electronic financial transaction caused by a bank transaction, an insurance transaction, a stock transaction, etc. Biometric recognition technology refers to technology for confirming the identity of individuals or identifying individuals by using biometric information. In current biometric recognition technology, a fingerprint, a face, an iris, voice, etc. are used to identify an individual.

A recognition device for fingerprint recognition technology has small size and can be mass produced at low cost. Also, the recognition device shows relatively favorable performance in terms of accuracy and immediacy of recognition. However, a fingerprint is exposed outside the body and thus is easily stolen. Also, a fingerprint may be deformed by sweat and the like such that recognition performance may be affected by the deformation. Further, there is a problem of sanitation. In addition, since about one of ten million users currently has a fingerprint that is recognized to be identical or similar to a fingerprint of another user, an error occurs in user authentication.

Iris recognition technology is the most reliable biometric recognition technology because there is almost no probability of recognition error and it is difficult to forge an iris pattern. However, most people are reluctant to let their eyes be directly irradiated for iris recognition, and an iris recognition device has large size and is expensive. Face or voice recognition technology uses the most natural biometric information for identity recognition. However, face or voice recognition technology shows lower accuracy than other technologies.

To overcome the aforementioned drawbacks of biometric recognition technologies, finger vein recognition technology has been developed.

Finger vein recognition technology refers to a technology for identifying an individual by using a finger vein pattern image acquired through infrared light. Human veins are positioned directly under the skin in a complicated shape, and according to several studies, it is known that the pattern of veins varies according to every individual and does not change with age. Finger vein recognition technology has the following advantages. Since veins exist inside an individual's body, there is almost no risk of theft or forgery, and recognition is not affected at all by the state of a finger surface. Also, it is possible to configure a non-contact type device, which offers high user convenience, using infrared light, and a camera with a low resolution can be used to acquire a simple finger vein image that is small and requires simple image processing because a finger vein pattern is stable and can be found relatively clearly. In other words, finger vein recognition technology can provide balanced performance in terms of security and convenience.

Since finger vein recognition technology makes forgery or counterfeiting difficult due to these advantages compared to fingerprint, iris, face, and voice recognition technology, it is possible to implement a biometric authentication device with high safety and miniaturize the biometric authentication device. Therefore, finger vein recognition technology is expected to be applied to various fields.

However, about one of million users currently has finger veins that are recognized to be identical or similar to finger veins of another user, and thus an error occurs in user authentication. Consequently, a more accurate user authentication technique using finger veins and a fingerprint is necessary.

### [Prior Art Literature]

1. Korean Unexamined Patent Publication No. 10-2014-0003274 (published on January 9, 2014)
2. Korean Unexamined Patent Publication No. 10-2012-0125816 (published on November 19, 2012)
3. Korean Patent No. 10-0954776 (firmed on April 28, 2010)
4. Korean Patent No. 10-1050301 (firmed on July 19, 2011)

### [Disclosure]

### [Technical Problem]

The present invention is directed to providing a financial transaction relay system having a multi-safety lock function using finger vein authentication, and a processing method of the financial transaction relay system.

The present invention is also directed to providing a financial transaction relay system having a multi-safety lock function for simultaneously scanning finger veins and a fingerprint and sequentially processing user authentication, and a processing method of the financial transaction relay system.

The present invention is also directed to providing a financial transaction relay system having a multi-safety lock function using a middleware firewall, and a processing method of the financial transaction relay system.

The present invention is also directed to providing a financial transaction relay system that has a multi-safety lock function using finger vein authentication, fingerprint authentication, and password authentication and relays an e-commerce transaction and an electronic financial transaction to allow authentication-free access in the e-commerce transaction and the electronic financial transaction and a financial transaction, and a processing method of the financial transaction relay system.

### [Technical Solution]

One aspect of the present invention provides a financial transaction relay system including: a communication network; a customer terminal configured to be connected to the communication network and to have a fingerprint recognizer to which fingerprint information is input and a finger vein recognizer for extracting finger vein information; and a financial transaction relay server configured to be accessed by the customer terminal via the communication network, to register a member by receiving the fingerprint information, a password, and the finger vein information from the customer terminal, and when the customer terminal performs any one of an electronic financial transaction and an e-commerce transaction, to receive the fingerprint information, the password, and the finger vein information from the customer terminal, to process authentication, and to relay the financial transaction by accessing without authentication an electronic financial transaction system for electronic financial transactions or an e-commerce system for e-commerce transactions so that the financial transaction is performed.

The financial transaction relay server of the present invention may include: a fingerprint recognition processing unit configured to receive the fingerprint information from the customer terminal and determine whether the received fingerprint information coincides with the preregistered fingerprint information; a multi-safety lock module including an account password processing unit configured to register an account password of the customer terminal and a phone number authentication processing unit configured to perform authentication by using a phone number of the customer terminal; and a middleware firewall including a middleware approval processing unit configured to receive the finger vein information of the customer terminal, determine whether the received finger vein information coincides with the preregistered finger vein information, and give an approval so that the electronic financial transaction and the e-commerce transaction are relayed to the electronic financial transaction system and the e-commerce transaction when all of the fingerprint information, the password, and the finger vein information coincide with the preregistered fingerprint information, password, and finger vein information.

The finger vein recognizer of the present invention may include: a scanner configured to acquire finger vein information by scanning a finger of a customer; a memory configured to extract a finger vein pattern from the finger vein information acquired by the scanner and store the extracted finger vein pattern; a finger vein image display unit configured to display the finger vein information scanned by the scanner or a processing procedure of the finger vein recognizer; an interface module configured to be connected to the customer terminal and provide the finger vein information acquired by the scanner to the customer terminal; and a controller configured to control overall operation of the finger vein recognizer, wherein the memory may store a finger vein pattern extraction program for extracting the finger vein pattern from the acquired finger vein information and determining whether the extracted finger vein pattern coincides with a finger vein pattern of a customer.

Another aspect of the present invention provides a financial transaction relay system including: a communication network; a customer terminal configured to be connected to the communication network and to have a fingerprint recognizer for recognizing fingerprint information of a customer and a finger vein recognizer for extracting finger vein information; and a financial transaction relay server configured to be accessed by the customer terminal via the communication network, to register a member by receiving the finger vein information and the fingerprint information from the customer terminal, when the customer terminal performs any one of an electronic financial transaction, to receive the finger vein information and the fingerprint information from the customer terminal, to process user authentication first by using the finger vein information, when user identification is impossible based on the finger vein information, to process user authentication second by using the fingerprint information, to process middleware firewall authentication by receiving a password from the customer terminal, and to relay the financial transaction by accessing without authentication an electronic financial transaction system for electronic financial transactions or an e-commerce system for e-commerce transactions so that the financial transaction is performed.

The financial transaction relay server of the present invention may include: a multi-safety lock module including a finger vein and fingerprint recognition processing unit configured to receive the finger vein information and the fingerprint information from the customer terminal, sequentially determine whether the received finger vein information and fingerprint information coincide with the preregistered finger vein information and fingerprint information, and perform processing such that the fingerprint information is used to identify a user when user identification is impossible based on the finger vein information, and a password processing unit configured to register a password of the customer terminal and process authentication by using the password; and the middleware firewall including a middleware approval processing unit configured to receive the finger vein information of the customer terminal, determine whether the received finger vein information coincides with the preregistered finger vein information, and give an approval so that the electronic financial transaction and the e-commerce transaction are relayed to the electronic financial transaction system and the e-commerce transaction when the finger vein information or the fingerprint information and the password coincide with the preregistered finger vein information or fingerprint information and password.

The finger vein recognizer of the present invention may include: a scanner configured to acquire finger vein information by scanning a finger of a customer; a memory configured to store a finger vein pattern extraction program for extracting a finger vein pattern from the finger vein information acquired by the scanner, storing the extracted finger vein pattern, and determining whether the extracted finger vein pattern coincides with a finger vein pattern of a customer; a finger vein image display unit configured to display the finger vein information scanned by the scanner or a processing procedure of the finger vein recognizer; an interface module configured to be connected to the customer terminal and provide the finger vein information acquired by the scanner to the customer terminal; and a controller configured to control overall operation of the finger vein recognizer.

Another aspect of the present invention provides a processing method of a financial transaction relay system, the processing method including: accessing, by a customer terminal having a fingerprint recognizer and a finger vein recognizer, a financial transaction relay server via a communication network and gaining membership; acquiring fingerprint information from the fingerprint recognizer of the customer terminal, acquiring finger vein information from the finger vein recognizer, and registering the fingerprint information and the finger vein information by transmitting the fingerprint information and the finger vein information to the financial transaction relay server via a communication network; when the customer terminal accesses the financial transaction relay server and transmits fingerprint information first to perform an electronic financial transaction and an e-commerce transaction, authenticating, by the financial transaction relay server, a user of the customer terminal by determining whether the received fingerprint information coincides with the pre-stored fingerprint information; receiving, by the financial transaction relay server, a password second from the customer terminal and determining whether the received password coincides with a pre-stored password; when the passwords coincides with each other, receiving, by the financial transaction relay server, finger vein information from the customer terminal and determining third whether the received finger vein information coincides with pre-stored finger veins; when it is determined that the received finger vein information coincides with the pre-stored finger vein information, disabling, by the financial transaction relay server, a firewall forth through a middleware approval processing unit so that a multi-safety lock module opens a database of the financial transaction relay server; and relaying, by the financial transaction relay server, a financial transaction by accessing an electronic financial transaction system or an e-commerce system without authentication.

Another aspect of the present invention provides a processing method of a financial transaction relay system, the processing method including: accessing, by a customer terminal having a fingerprint recognizer and a finger vein recognizer as one module, a financial transaction relay server via a communication network to gain membership, acquiring fingerprint information and finger vein information from the fingerprint recognizer and the finger vein recognizer by simultaneously performing scanning with the fingerprint recognizer and the finger vein recognizer, and registering the fingerprint information and the finger vein information by transmitting the fingerprint information and the finger vein information to the financial transaction relay server via a communication network; when the customer terminal accesses the financial transaction relay server to perform an electronic financial transaction and an e-commerce transaction, receiving, by the financial transaction relay server, finger vein information and fingerprint information from the customer terminal and determining first whether the received finger vein information is unique by comparing the received finger vein information with registered pieces of finger vein information; when it is determined that the received finger vein information is not unique, determining second whether the received fingerprint information is unique by comparing the received fingerprint information with registered pieces of fingerprint information; and when it is determined that the received fingerprint information is unique, processing firewall password authentication by receiving a password from the customer terminal.

### [Advantageous Effects]

As described above, a financial transaction relay system of the present invention provides a multi-safety lock function by using a fingerprint and finger veins for an electronic financial transaction and an e-commerce transaction, and processes authentication by receiving fingerprint information and finger vein information from a customer terminal, such that a financial transaction can be performed by accessing an electronic financial transaction system and an e-commerce system without authentication.

A financial transaction relay system of the present invention authenticates a user by using finger veins first, and authenticates the user by using a fingerprint second when a user authentication error occurs. Therefore, even when it is difficult to identify the user because there are identical or similar finger veins and an identical or similar fingerprint, it is possible to minimize user authentication errors.

A financial transaction relay system of the present invention provides a multi-safety lock function by using a fingerprint and finger veins for an electronic financial transaction and an e-commerce transaction, and processes authentication by receiving fingerprint information, finger vein information, and a password for firewall authentication from a customer terminal, such that a financial transaction can be performed by accessing an electronic financial transaction system and an e-commerce system without authentication

A financial transaction relay system of the present invention registers fingerprint information, a password, and finger vein information of a customer terminal once the customer terminal gains membership. Therefore, it is possible to provide a safety lock function for a financial transaction, and remove the inconvenience of issuing a certificate. Consequently, economic convenience can be provided as a new change of financial transactions.

Since a financial transaction relay system of the present invention can access an electronic financial transaction system and an e-commerce system without authentication and perform a financial transaction, the financial transaction relay system is suitable for the ubiquitous era in which it is possible to use a financial transaction anytime anywhere through fusion with information technology (IT).

A financial transaction relay system of the present invention is provided as a biometric security management system having a multi-safety lock function which opens a new prospect in the digital fintech evolution era not only by preventing hacking with middleware firewall but also by making it possible to simultaneously use external and internal patterns of a fingerprint and finger veins according to a movement path of one finger. Therefore, it is possible to implement specialized technical skills that cannot be imitated anywhere in the word and can be held and provided by the present applicant.

Since a financial transaction relay system of the present invention provides a multi-safety lock function by using a fingerprint and finger veins, the financial transaction relay system can never be used by a person other than a customer oneself, and copy, forgery, and counterfeiting are impossible. Even in the case of a misuse, for example, when a finger of a dead person is used for fingerprint recognition, it is impossible to use a finger vein pattern, and thus the financial transaction relay system is dominant as next-generation biometric recognition technology for individual identification.

### [Description of Drawings]

FIG. 1 is a block diagram showing a configuration of a financial transaction relay system having a multi-safety lock function using finger vein authentication according to the present invention.
FIG. 2 is a block diagram showing a configuration of a financial transaction relay server shown in FIG. 1.
FIG. 3 is a block diagram showing a partial configuration of a customer terminal shown in FIG. 1.
FIG. 4 is a flowchart illustrating a processing procedure of a financial transaction relay system having a multi-safety lock function using finger vein authentication according to an embodiment of the present invention.
FIG. 5 is a flowchart illustrating a processing procedure of a financial transaction relay system having a multi-safety lock function for processing user authentication by simultaneously scanning finger veins and a fingerprint according to another embodiment of the present invention.

**(List of Reference Signs)**

| | |
|---|---|
| 2: financial transaction relay system | 4, 6: communication network |
| 100: financial transaction relay server | 110: multi-safety lock module |
| 112: finger vein and fingerprint processing unit | |
| 114: password processing unit | |
| 116: phone number authentication processing unit | |
| 120: middleware firewall | |
| 122: middleware authentication processing unit | |
| 200: customer terminal | 210: fingerprint recognizer |
| 220: finger vein recognizer | 250: module |
| 300: electronic financial transaction system | |
| 400: e-commerce system | |

### [Modes of the Invention]

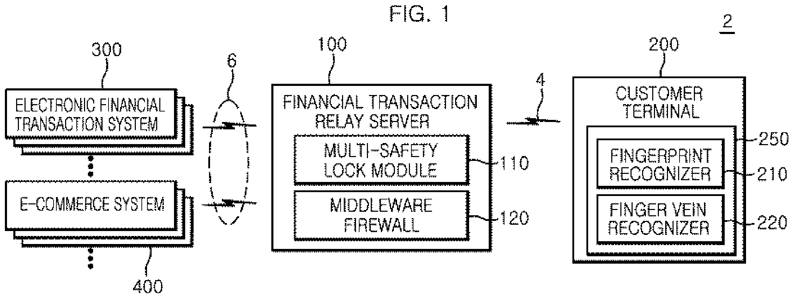

Hereinafter, embodiments of the present invention will be described in detail with reference to FIGS. 1 to 5.

Embodiments of the present invention can be modified in various forms, and the scope of the present invention should not be construed as being limited to embodiments described below. The embodiments are provided to fully describe the present invention to those of ordinary skill in the art. Therefore, in the drawings, shapes of components and the like are exaggerated for clarity of description.

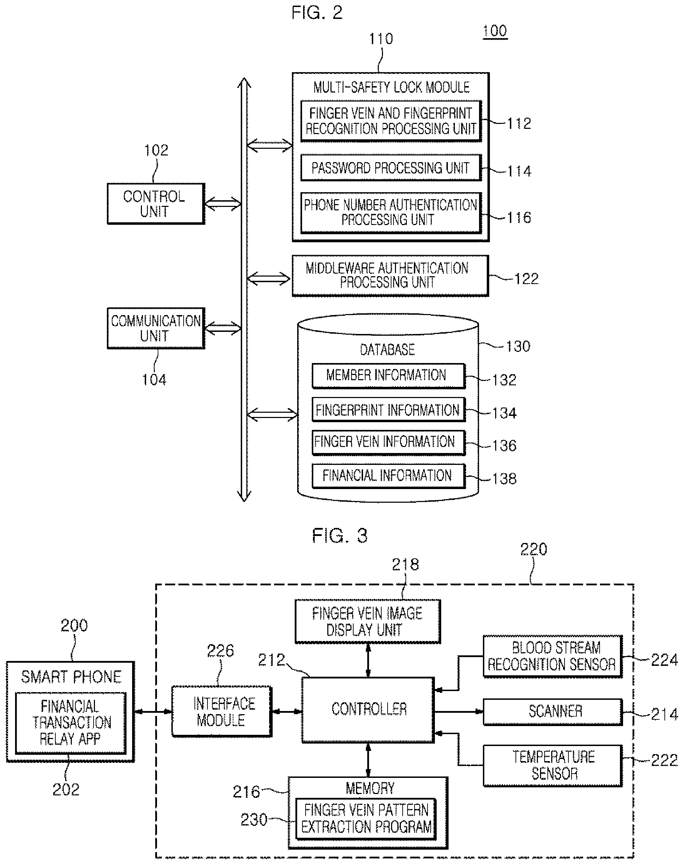

FIG. 1 is a block diagram showing a configuration of a financial transaction relay system having a multi-safety lock function using finger vein authentication according to the present invention, FIG. 2 is a block diagram showing a configuration of a financial transaction relay server shown in FIG. 1, and FIG. 3 is a block diagram showing a partial configuration of a customer terminal shown in FIG. 1.

The present invention relates to an improvement invention of Korean Patent Application No. 10-2014-0124035 "System for relaying financial transaction with multiple safety function and method for processing thereof" filed on September 18, 2014 by the present applicant and Korean Patent Application No. 10-2015-0004590 "Electronic payment system using finger vein recognition and method for processing thereof" filed on January 13, 2015 by the present applicant.

Referring to FIGS. 1 to 3, a financial transaction relay system 2 of the present invention relays an electronic financial transaction and an e-commerce transaction in an authentication-free access manner between a customer terminal 200 and electronic financial transaction systems 300 and e-commerce systems 400 for electronic financial transactions and e-commerce transactions.

To this end, the electronic financial transaction system 2 of the present invention registers the customer terminal 200 as a member in a financial transaction relay server 100 by using a middleware firewall 120 through at least one user authentication method among finger vein authentication, fingerprint authentication, and password and phone number authentication, and relays electronic financial transactions and e-commerce transactions by allowing authentication-free access when financial transactions are performed between the customer terminal 200 and the electronic financial transaction systems 300 and the e-commerce systems 400.

Specifically, the financial transaction relay system 2 of the present invention includes communication networks 4 and 6, the customer terminal 200, the electronic financial transaction systems 300, the e-commerce systems 400, and the financial transaction relay server 100.

The communication networks 4 and 6 are provided as, for example, wired and wireless communication networks, mobile communication networks, etc. that are unitary or hybrid communication networks in which the customer terminal 200, the electronic financial transaction systems 300, and the financial transaction relay server 100 are connected for data communication and the customer terminal 200, the e-commerce systems 400, and the financial transaction relay server 100 are connected for data communication.

The customer terminal 200 is provided as a portable computer, a personal computer (PC), and the like, for example, a smart phone, a tablet computer, a laptop PC, etc., and accesses the financial transaction relay server 100 via the communication network 4. To this end, the customer terminal 200 accesses the financial transaction relay server 100 by using a web browser or a mobile application, and performs electronic financial transactions and e-commerce transactions with the electronic financial transaction systems 300 and the e-commerce systems 400 through the financial transaction relay server 100.

The customer terminal 200 has a fingerprint recognizer 210 that acquires fingerprint information and a finger vein recognizer 220 that extracts finger vein information. The customer terminal 200 provides the fingerprint information acquired by the fingerprint recognizer 210 and the finger vein information extracted by the finger vein recognizer 220 to the financial transaction relay server 100 via the communication network 4. In this embodiment, the fingerprint recognizer 210 and the finger vein recognizer 220 are provided as one module 230 such that a fingerprint and finger veins can be simultaneously scanned for user authentication.

The customer terminal 200 accesses the financial transaction relay server 100 via the communication network 4 and gains membership. At this time, the customer terminal 200 registers the fingerprint information and the finger vein information in the financial transaction relay server 100, and registers a password that has been registered in the electronic financial transaction systems 300 or the e-commerce systems 400. In addition, the customer terminal 200 may be authenticated by the financial transaction relay server 100 by using a phone number. For electronic financial transactions and e-commerce transactions with the electronic financial transaction systems 300 and the e-commerce systems 400, the fingerprint recognizer 210 and the finger vein recognizer 220 are provided as the single module 250 in the customer terminal 200, simultaneously scan a fingerprint and finger veins, and provide the recognized fingerprint information and finger vein information to the financial transaction relay server 100.

The customer terminal 200 of this embodiment is provided as a smart phone. The customer terminal 200 accesses the financial transaction relay server 100 via the communication network 4, downloads a financial transaction relay app 202 for electronic financial transactions and e-commerce transactions, and installs the financial transaction relay app 202 therein as shown in FIG. 3. Also, the customer terminal 200 activates the financial transaction relay app 202, simultaneously scan fingerprint information and finger vein information through the fingerprint recognizer 210 and the finger vein recognizer 220, and provides the scanned fingerprint information and finger vein information to the financial transaction relay server 100 via the communication network 4.

The fingerprint recognizer 210 and the finger vein recognizer 220 of the customer terminal 200 may be provided as the single module 250 of the customer terminal 200 and provided in the customer terminal 200, or may be provided as a separate device that can be attached to and detached from the customer terminal 200 as shown in FIG. 3. To remove the economic load for a customer to purchase the fingerprint recognizer 210 and the finger vein recognizer 220 and encourage use of the financial transaction relay app 202, when a service provider, a member store, a credit card company, or the like of the financial transaction relay server 100 provides the fingerprint recognizer 210 and the finger vein recognizer 220 to a commercial site and the fingerprint recognizer 210 and the finger vein recognizer 220 are registered and used as a payment means using a fingerprint and finger veins, the fingerprint recognizer 210 and the finger vein recognizer 220 may be provided in a form that can be attached to and detached from the customer terminal 200.

Since various technologies for the fingerprint recognizer 210 have been disclosed already, detailed descriptions of configurations, operations, functions, etc. for acquiring and identifying fingerprint information will be omitted herein.

The finger vein recognizer 220 recognizes a hemoglobin pattern of veins by projecting near-infrared light or the like to veins of a finger that can be easily used among blood vessels of the customer and extracts and acquires finger vein information to authenticate the customer. In other words, the property of finger veins absorbing near-infrared light and the property of a finger except veins transmitting near-infrared light are used to emit near-infrared light to a finger and take an image of the finger with a scanner having near-infrared sensitivity, for example, an infrared camera. In this way, an image of veins is captured such that a pattern of the veins may be extracted and used for individual authentication.

However, about one of million users has finger veins that are recognized to be identical or similar to a fingerprint of another user, and it is not possible to identify the user. For this reason, in the present invention, when finger vein information recognized by the finger vein recognizer 220 is identical or similar to finger vein information stored in a database 130 of the financial transaction relay server 100 and thus it is difficult to identify the finger vein information, that is, when the finger vein information is not unique finger vein information, fingerprint information recognized by the fingerprint recognizer 210 is used to authenticate a user, that is, a customer.

Therefore, the financial transaction relay server 100 processes user authentication by using finger veins, and processes user authentication second by using a fingerprint when an authentication error occurs.

Specifically, the finger vein recognizer 220 of this embodiment includes a controller 212 that controls overall operation of the finger vein recognizer 220, a scanner 214 that acquires finger vein information by scanning a finger of a customer, a memory 216 that extracts a finger vein pattern from the finger vein information acquired by the scanner 214 and stores the extracted finger vein pattern, a finger vein image display unit 218 that displays the finger vein information scanned by the scanner 214 or a processing procedure of the finger vein recognizer 220, and an interface module 226 that is connected to the customer terminal 200 and provides the finger vein information acquired by the scanner 214 to the customer terminal 200.

The memory 216 stores a finger vein pattern extraction program 230 for extracting the finger vein pattern from the acquired finger vein information. The finger vein pattern extraction program 230 is provided as, for example, a level set curvature program, removes noise from an image of the finger acquired by the scanner 214, separates an image of only a finger part by removing a surrounding part from the finger image from which noise has been removed, extracts the finger vein pattern from the finger part image by using a level set curvature, and binarizes and thins the extracted finger vein pattern. Subsequently, it is possible to determine whether the finger vein pattern coincides with a finger vein pattern of a customer according to a command of the level set curvature program 230.

The finger vein recognizer 220 further includes a temperature sensor 222 that senses the temperature of the finger when the finger vein information is acquired by the scanner 214 and a blood stream recognition sensor 224 that recognizes blood flowing in the finger when the finger vein information is acquired from the scanner 214. For example, to solve a problem that only a finger of other people can be used to scan finger vein information for a predetermined time, when the finger vein recognizer 220 recognizes the temperature and the blood stream of the finger together with the finger vein information acquired by the scanner 214 and determines that there is nothing wrong, the finger vein recognizer 220 processes the finger vein information acquired by the scanner 214 to be provided to the customer terminal 200.

The finger vein recognizer 220 may be provided as, for example, a configuration of "finger vein authentication system" of Korean Patent No. 10-1496852 (firm date: March 2, 2015) and the like.

Referring back to FIG. 1, the electronic financial transaction systems 300 are provided to affiliated banks, insurance companies, securities companies, and the like, and process electronic financial transactions caused by banking, insurance, and securities businesses requested online by the customer terminal 200. The electronic financial transaction systems 300 are accessed without authentication when the customer terminal 200 is approved with the multi-safety lock function.

The e-commerce systems 400 are provided as, for example, online shopping mall systems of department stores, discount shops, etc., passenger transport reservation systems of airplanes, trains, etc., lodging reservation systems of condominiums, hotels, etc., cultural performance reservation systems of movies, plays, concerts, etc. leisure activity reservation systems, and the like. When the customer terminal 200 is approved with the multi-safety lock function to use an e-commerce transaction through the financial transaction relay server 100, the e-commerce systems 400 are accessed without authentication.

When the customer terminal 200 gains membership, the financial transaction relay server 100 registers the customer terminal 200 as a member through a multi-safety lock module 110. For electronic financial transactions and e-commerce transactions with the electronic financial transaction systems 300 and the e-commerce systems 400, the financial transaction relay server 100 simultaneously scans finger vein information and fingerprint information through the customer terminal 200 to sequentially process authentication of a user, and processes authentication of the user through a password and the middleware firewall 120. When the customer terminal 200 is approved with the multi-safety lock function for electronic financial transactions and e-commerce transactions with the electronic financial transaction systems 300 and the e-commerce systems 400, the financial transaction relay server 100 relays a financial transaction so that the financial transaction is performed through authentication-free access. The financial transaction relay server 100 builds a personal portal website for electronic financial transactions and e-commerce transactions.

Specifically, as shown in FIG. 2, the financial transaction relay server 100 includes a control unit 102, a communication unit 104, the multi-safety lock module 110, a middleware authentication processing unit 122, and a database 130. Although not shown in the drawing, the financial transaction relay server 100 has components of a typical computer system, for example, a central processing unit (CPU), a memory device, an input/output (I/O) device, a storage device, and the like.

The control unit 102 controls and processes overall operation of the financial transaction relay server 100. For example, the control unit 102 may include software, such as an operating system (OS) program, a control program, etc., as well as hardware, such as a CPU, a memory, a web server, or the like. When the customer terminal 200 performs electronic financial transactions and e-commerce transactions with the electronic financial transaction systems 300 and the e-commerce systems 400, the control unit 102 receives finger vein information, fingerprint information, and at least one of password information and phone number information and processes the multi-safety lock module 110 so that authentication-free access is made to the electronic financial transaction systems 300 and the e-commerce systems 400. At this time, when the finger vein information of a user is identical or similar to a plurality of pieces of finger vein information among pieces of finger vein information stored in the database 130 and it is impossible to identify the user, the control unit 102 performs control so that user authentication is additionally processed by using the fingerprint information.

Also, the control unit 102 performs control so that the customer terminal 200 processes finger vein authentication and fingerprint authentication and processes password authentication through the middleware firewall 120 to make access and the middleware authentication processing unit 122 processes the multi-safety lock function. Here, the control unit 102 may process user authentication by using the phone number instead of password authentication, or may process phone number authentication together with the password.

The communication unit 104 connects the customer terminal 200 with the electronic financial transaction systems 300 and the e-commerce systems 400 via the communication networks 4 and 6, thereby connecting the customer terminal 200 to the financial transaction relay server 100 so that electronic financial transactions and e-commerce transactions are performed through authentication-free access.

The multi-safety lock module 110 is provided as, for example, software and has a function of authenticating the user of the customer terminal 200 in multiple stages. In this embodiment, the multi-safety lock module 110 includes a finger vein and fingerprint recognition processing unit 112 that receives the finger vein information and the fingerprint information from the customer terminal 200, sequentially determines whether the received finger vein information and fingerprint information coincide with preregistered finger vein information and fingerprint information, and performs processing so that the fingerprint information is used to identify the user when user identification is impossible based on the finger vein information; a password processing unit 114 that registers the password of the customer terminal 200 and processes firewall authentication by using the password, and a phone number authentication processing unit 116 that performs authentication by using the phone number of the customer terminal 200.

The middleware firewall 120 has the middleware authentication processing unit 122. The middleware authentication processing unit 122 is provided between the multi-safety lock module 110 and the database 130 and processes final authentication of the customer terminal 200 which has been authenticated, that is, approved, by the multi-safety lock module 110 so that various kinds of information of the database 130 can be provided to the electronic financial transaction systems 300 or the e-commerce systems 400.

The database 130 stores various kinds of information resulting from processing procedures of the multi-safety lock module 110 under control of the control unit 102. In this embodiment, the database 130 is provided in the financial transaction relay server 100, but may be provided as a separate database server.

Specifically, the database 130 stores member information 132, fingerprint information 134, finger vein information 136, and financial information 138. The member information 132 includes information input when respective customer terminals 200 gain membership of the financial transaction relay server 100, that is, user information of the customer terminals 200, for example, names, identities (IDs), passwords, phone numbers, email addresses, and the like. The member information 132 matches the fingerprint information 134, the finger vein information 136, and the financial information 138. The member information 132 is input when the customer terminals 200 activate the financial transaction relay apps 202 and gain membership.

As the fingerprint information 134, fingerprint information acquired from the fingerprint recognizers 210 of the customer terminals 200 is received and stored when users of the customer terminals 200 are registered as members of the financial transaction relay server 100.

The finger vein information 136 is registered to correspond to the member information 132. The finger vein information 136 is acquired from the finger vein recognizers 220 of the customer terminals 200, and is provided from the customer terminals 200 to the financial transaction relay server 100 via the communication network 4. Therefore, the finger vein information 136 registered in the financial transaction relay server 100 corresponds to one payment means (e.g., a virtual payment means) or is used as information required for user authentication of a previously issued payment means (e.g., a credit card, an account, etc.). Finger vein patterns are extracted, and information on the extracted finger vein patterns are stored as the finger vein information 136.

The financial information 138 includes information on previously issued payment means of the customer terminals 200, for example, credit cards, debit cards, check cards, and accounts, and may further include passwords for accounts registered in the electronic financial transaction systems 300 or the e-commerce systems 400 or passwords for authentication for the middleware firewall 120.

The financial transaction relay server 100 builds a platform that processes fingerprint (or finger vein) authentication first based on a mobile application, that is, the financial transaction relay app 202, processes firewall password authentication second, processes finger vein (or fingerprint) authentication third, and processes financial-management middleware authentication fourth. When the customer terminal 200 finally passes through a firewall authentication line which is a final boundary, the financial transaction relay server 100 causes the customer terminal 200 to access the multi-safety lock module 110 and pass through the middleware approval processing unit 122 between software and a hardware OS, which cause three items of the fingerprint information processing unit 112, the password processing unit 114, and the phone number processing unit 116 processed by the control unit 102 and three items of the member information 132, the fingerprint information 134, and the financial information 136 associated with the database 130 to work in conjunction with each other. In this way, consistent information approval is requested for the total of six items, and is completely processed according to final operation of the middleware approval processing unit 122 associated with the multi-safety lock module 110.

Therefore, in the financial transaction relay system 2 of the present invention, the multi-safety lock function is opened such that electronic financial transactions and e-commerce transactions can be easily and conveniently used through authentication-free access.

As described above, the financial transaction relay system 2 of the present invention processes a multi-authentication path including fingerprint, password, and finger vein authentication and the multi-safety lock function of the middleware authentication processing unit 122 so that authentication-free access can be allowed only when the customer terminal 200 goes through the multi-stage procedure of fingerprint authentication, password authentication, finger vein authentication, and a middleware authentication process therefor by using the mobile application 202.

In the above-described financial transaction relay system 2 of the present invention, a mobile application is downloaded to the customer terminal 200 through smart phone or personal portal access and used for a financial transaction. Here, as soon as a customer touches the customer terminal 200 with his or her one finger, the financial transaction relay server 100 recognizes his or her finger veins and fingerprint and simultaneously accesses a password. Then, only when the customer terminal 200 goes through an authentication process of the middleware firewall 120, authentication-free access is allowed.

In the authentication process of the middleware firewall 120 of the present invention, a finger vein pattern is extracted by scanning unique finger veins of each customer, and one of a plurality of pieces of finger vein information associated with finger vein information of the database 130 is recognized. Then, as soon as the finger is removed, the customer's information is removed. Also, every time finger veins are scanned, a finger vein pattern is newly extracted and automatically recognized. Here, when user authentication is processed by using finger veins (or a fingerprint) first, a user authentication error may occur. In this case, user authentication is processed by using a fingerprint (or finger veins) second such that user authentication errors can be minimized even when it is difficult to identify a user because there are identical or similar finger veins and an identical or similar fingerprint.

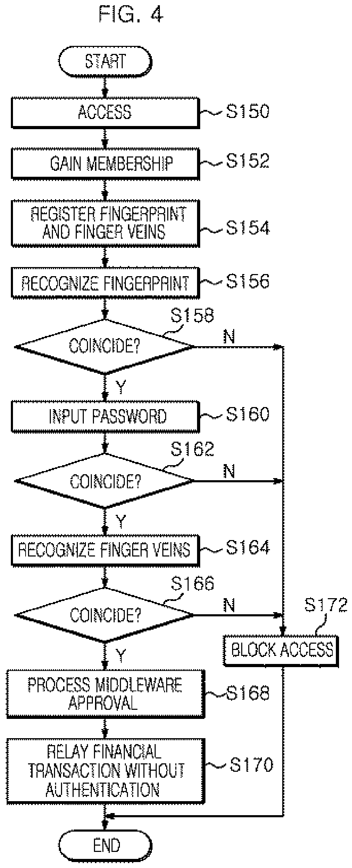

FIG. 4 is a flowchart illustrating a processing procedure of a financial transaction relay system having a multi-safety lock function using finger vein authentication according to an embodiment of the present invention.

Referring to FIG. 4, in the financial transaction relay system 2 of the present invention, the customer terminal 200 accesses the financial transaction relay server 100 via the communication network 4 in step S150, and gains membership in step S152. At this time, the customer terminal 200 inputs personal information of a customer, such as a name, an ID, a password, a phone number, an email address, and the like.

In step S154, the customer terminal 200 acquires fingerprint information and finger vein information through the fingerprint recognizer 210 and the finger vein recognizer 220 and transmits the fingerprint information and the finger vein information to the financial transaction relay server 100 via the communication network 4, and the financial transaction relay server 100 registers the fingerprint information and the finger vein information in association with the customer terminal 200. At this time, the financial transaction relay server 100 stores the fingerprint information 134 and the finger vein information 136 in the database 130.

In step S156, the financial transaction relay server 100 recognizes a fingerprint first to perform an electronic financial transaction and an e-commerce transaction. In step S158, the financial transaction relay server 100 authenticates a user of the customer terminal 200 by determining whether the recognized fingerprint coincides with fingerprint information stored in the database.

The financial transaction relay server 100 receives a password from the customer terminal 200 second in step S160, and determines whether the received password coincides with a password stored in the database 130 in step S162. The password stored in the database 130 is included in the member information 132. When it is determined that the two passwords coincides with each other, the financial transaction relay server 100 recognizes finger veins third in step S164, and determines whether the recognized finger veins coincide with the finger vein information 136 stored in the database in step S166.

When it is determined that the two pieces of finger vein information coincide with each other, the process proceeds to step S168, in which the financial transaction relay server 100 disables a firewall through the middleware approval processing unit 122 so that the multi-safety lock module 110 can open the database 130 of the financial transaction relay server 100. Subsequently, in step S170, the financial transaction relay server 100 relays financial transactions to access the electronic financial transaction systems 300 or the e-commerce systems 400 without authentication.

However, when any one of the fingerprint information, the password, and the finger vein information does not coincide with that stored in the database 130 in steps S158, S162, and S166, the process proceeds to step S172, in which access of the financial transaction relay server 100 is blocked so that electronic financial transactions and e-commerce transactions cannot be processed.

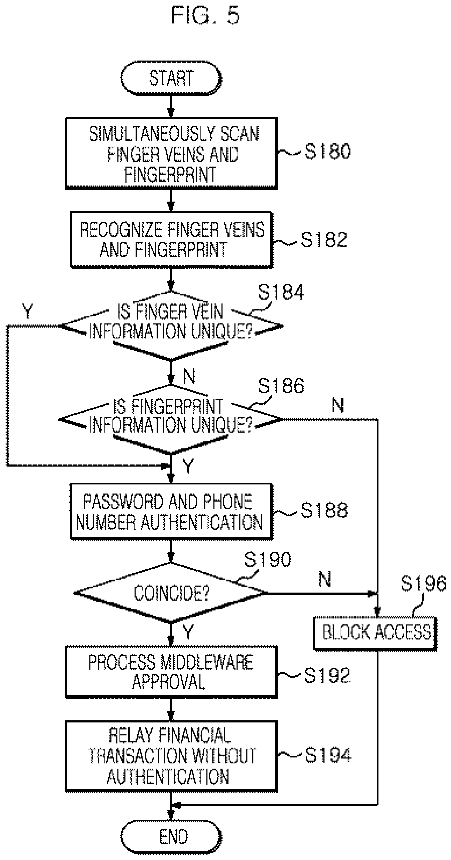

FIG. 5 is a flowchart illustrating a processing procedure of a financial transaction relay system having a multi-safety lock function for processing user authentication by simultaneously scanning finger veins and a fingerprint according to another embodiment of the present invention. This embodiment corresponds to a case in which it is difficult to identify a user because there is identical or similar finger vein information and fingerprint information. In this embodiment, user authentication is processed first by using finger vein information, and is processed second by using fingerprint information when it is difficult to identify a user in the first user authentication.

Referring to FIG. 5, in step S180, a fingerprint and finger veins are simultaneously scanned by the fingerprint recognizer 210 and the finger vein recognizer 220 of the customer terminal 200, and the fingerprint information and the finger vein information is provided to the financial transaction relay server 100 in the financial transaction relay system 2 of the present invention.

The financial transaction relay server 100 recognizes the finger vein information and the fingerprint information in step S182, and determines whether the finger vein information is unique by comparing the finger vein information with pieces of finger vein information stored in the database 130 in step S184.

When it is determined that the finger vein information is unique, the process proceeds to step S188, and when it is determined that the finger vein information is not unique, that is, when it is difficult to identify a user because there are identical or similar pieces of finger vein information, the financial transaction relay server 100 determines whether the fingerprint information is unique by comparing the fingerprint information with fingerprint information stored in the database 130 in step S186.

When it is determined that the fingerprint information is unique, the process proceeds to step S188, in which user authentication is processed for disabling or closing a firewall by using at least one of a password and a phone number.

In step S190, the financial transaction relay server 100 determines whether the password and/or the phone number coincides with a password and/or a phone number stored in the database 130. When the passwords and/or the phone numbers coincide with each other, the financial transaction relay server 100 disables the firewall through the middleware approval processing unit 122 in step S192 so that the multi-safety lock module 110 can open the database 130 of the financial transaction relay server 100. Subsequently, in step S194, the financial transaction relay server 100 relays financial transactions to access the electronic financial transaction systems 300 or the e-commerce systems 400 without authentication.

However, when it is impossible to identify the user of the customer terminal 200 or the password and/or the phone number does not coincide with that stored in the database 130 in step S186 or S190, the process proceeds to step S196, in which access of the financial transaction relay server 100 is blocked so that electronic financial transactions and e-commerce transactions cannot be processed.

Although a configuration and operation of a financial transaction relay system having a multi-safety lock function for processing user authentication by simultaneously scanning finger veins and a fingerprint according to the present invention have been described in detail above with reference to the drawings, these are mere embodiments and can be modified and altered in various ways without departing from the technical spirit of the present invention.

## Claims

1. A processing method of a financial transaction relay system, the method comprising:
accessing, by a customer terminal having a fingerprint recognizer and a finger vein recognizer, a financial transaction relay server via a communication network and gaining membership;
acquiring fingerprint information from the fingerprint recognizer of the customer terminal, acquiring finger vein information from the finger vein recognizer, and registering the fingerprint information and the finger vein information by transmitting the fingerprint information and the finger vein information to the financial transaction relay server via a communication network;
when the customer terminal accesses the financial transaction relay server and transmits fingerprint information first to perform an electronic financial transaction and an e-commerce transaction, authenticating, by the financial transaction relay server, a user of the customer terminal by determining whether the received fingerprint information coincides with the pre-stored fingerprint information;
receiving, by the financial transaction relay server, a password second from the customer terminal and determining whether the received password coincides with a pre-stored password;
when the passwords coincides with each other, receiving, by the financial transaction relay server, finger vein information from the customer terminal and determining third whether the received finger vein information coincides with pre-stored finger veins;
when it is determined that the received finger vein information coincides with the pre-stored finger vein information, disabling, by the financial transaction relay server, a firewall forth through a middleware approval processing unit so that a multi-safety lock module open a database of the financial transaction relay server; and
relaying, by the financial transaction relay server, a financial transaction by accessing an electronic financial transaction system or an e-commerce system without authentication.

2. A processing method of a financial transaction relay system, the method comprising:
accessing, by a customer terminal having a fingerprint recognizer and a finger vein recognizer as one module, a financial transaction relay server via a communication network to gain membership, acquiring fingerprint information and finger vein information from the fingerprint recognizer and the finger vein recognizer by simultaneously performing scanning with the fingerprint recognizer and the finger vein recognizer, and registering the fingerprint information and the finger vein information by transmitting the fingerprint information and the finger vein information to the financial transaction relay server via the communication network;
when the customer terminal accesses the financial transaction relay server to perform an electronic financial transaction and an e-commerce transaction, receiving, by the financial transaction relay server, finger vein information and fingerprint information from the customer terminal and determining first whether the received finger vein information is unique by comparing the received finger vein information with registered pieces of finger vein information;
when it is determined that the received finger vein information is not unique, determining second whether the received fingerprint information is unique by comparing the received fingerprint information with registered pieces of fingerprint information; and
when it is determined that the received fingerprint information is unique, processing firewall password authentication by receiving a password from the customer terminal.

3. The processing method of claim 1 or 2, further comprising, when the finger vein recognizer recognizes temperature or blood stream of a finger together with the finger vein information acquired from a scanner and determines that there is nothing wrong, providing the finger vein information acquired from the scanner to the customer terminal.

4. A financial transaction relay system comprising:
a communication network;
a customer terminal configured to be connected to the communication network and to have a fingerprint recognizer to which fingerprint information is input and a finger vein recognizer for extracting finger vein information; and
a financial transaction relay server configured to be accessed by the customer terminal via the communication network, to register a member by receiving the fingerprint information, a password, and the finger vein information from the customer terminal, and when the customer terminal performs any one of an electronic financial transaction and an e-commerce transaction, to receive the fingerprint information, the password, and the finger vein information from the customer terminal, to process authentication, and to relay the electronic financial transaction or the e-commerce transaction by accessing without authentication an electronic financial transaction system for electronic financial transactions or an e-commerce system for e-commerce transactions so that a financial transaction is performed.

5. The financial transaction relay system of claim 4, wherein the financial transaction relay server of the present invention comprises:
a fingerprint recognition processing unit configured to receive the fingerprint information from the customer terminal and determine whether the received fingerprint information coincides with the preregistered fingerprint information;
a multi-safety lock module including an account password processing unit configured to register an account password of the customer terminal and a phone number authentication processing unit configured to perform authentication by using a phone number of the customer terminal; and
a middleware firewall including a middleware approval processing unit configured to receive the finger vein information of the customer terminal, determine whether the received finger vein information coincides with the preregistered finger vein information, and give an approval so that the electronic financial transaction and the e-commerce transaction are relayed to the electronic financial transaction system and the e-commerce transaction when all of the fingerprint information, the password, and the finger vein information coincide with the preregistered fingerprint information, password, and finger vein information.

6. The financial transaction relay system of claim 4 or 5, wherein the finger vein recognizer of the present invention comprises:
a scanner configured to acquire finger vein information by scanning a finger of a customer;
a memory configured to extract a finger vein pattern from the finger vein information acquired by the scanner and store the extracted finger vein pattern;
a finger vein image display unit configured to display the finger vein information scanned by the scanner or a processing procedure of the finger vein recognizer;
an interface module configured to be connected to the customer terminal and provide the finger vein information acquired by the scanner to the customer terminal; and
a controller configured to control overall operation of the finger vein recognizer, wherein the memory stores a finger vein pattern extraction program for extracting the finger vein pattern from the acquired finger vein information and determining whether the extracted finger vein pattern coincides with a finger vein pattern of a customer.

7. A financial transaction relay system comprising:
a communication network;
a customer terminal configured to be connected to the communication network and to have a fingerprint recognizer for recognizing fingerprint information of a customer and a finger vein recognizer for extracting finger vein information; and
a financial transaction relay server configured to be accessed by the customer terminal via the communication network, to register a member by receiving the finger vein information and the fingerprint information from the customer terminal, when the customer terminal performs any one of an electronic financial transaction, to receive the finger vein information and the fingerprint information from the customer terminal, to process user authentication first by using the finger vein information, when user identification is impossible based on the finger vein information, to process user authentication second by using the fingerprint information, to process middleware firewall authentication by receiving a password from the customer terminal, and to relay the financial transaction by accessing without authentication an electronic financial transaction system for electronic financial transactions or an e-commerce system for e-commerce transactions so that the financial transaction is performed.

8. The financial transaction relay system of claim 7, wherein the financial transaction relay server of the present invention comprises:
a multi-safety lock module including a finger vein and fingerprint recognition processing unit configured to receive the finger vein information and the fingerprint information from the customer terminal, sequentially determine whether the received finger vein information and fingerprint information coincide with the preregistered finger vein information and fingerprint information, and perform processing such that the fingerprint information is used to identify a user when user identification is impossible based on the finger vein information, and a password processing unit configured to register a password of the customer terminal and process authentication by using the password; and
the middleware firewall including a middleware approval processing unit configured to receive the finger vein information of the customer terminal, determine whether the received finger vein information coincides with the preregistered finger vein information, and give an approval so that the electronic financial transaction and the e-commerce transaction are relayed to the electronic financial transaction system and the e-commerce transaction when the finger vein information or the fingerprint information and the password coincide with the preregistered finger vein information or fingerprint information and password.

9. The financial transaction relay system of claim 7 or 8, wherein the finger vein recognizer of the present invention comprises:
a scanner configured to acquire finger vein information by scanning a finger of a customer;
a memory configured to store a finger vein pattern extraction program for extracting a finger vein pattern from the finger vein information acquired by the scanner, storing the extracted finger vein pattern, and determining whether the extracted finger vein pattern coincides with a finger vein pattern of a customer;
a finger vein image display unit configured to display the finger vein information scanned by the scanner or a processing procedure of the finger vein recognizer;
an interface module configured to be connected to the customer terminal and provide the finger vein information acquired by the scanner to the customer terminal; and
a controller configured to control overall operation of the finger vein recognizer.

10. The financial transaction relay system of claim 4 or 7, wherein the finger vein recognizer further comprises a blood stream recognition sensor configured to recognize temperature and blood stream of a finger when the finger vein information is acquired from the scanner, and processes the finger vein information acquired from the scanner to be provided to the customer terminal.
